# EUROPÄISCHE PATENTSCHRIFT

(11) **EP 1 531 071 B1**
(45) Veröffentlichungstag und Bekanntmachung des Hinweises auf die Patenterteilung: **21.05.2008**
(21) Anmeldenummer: 04022118.6
(22) Anmeldetag: 17.09.2004
(51) Int. Cl.: B60J 5/04

(54) **Profilrahmen für eine Kraftfahrzeugtür**
Profiled frame for a vehicle door
Cadre profilé pour une porte de véhicule

(30) Priorität: 17.11.2003 DE 10353744
(43) Veröffentlichungstag der Anmeldung: 18.05.2005
(73) Patentinhaber: Wagon Automotive GmbH, 63857 Waldaschaff (DE)
(72) Erfinder: Vath, Klaus, 63849 Leidersbach (DE)
(74) Vertreter: von Rohr, Hans Wilhelm

(56) Entgegenhaltungen:
- EP-A- 1 228 911
- DE-A1- 10 048 124
- US-A1- 2002 014 787

## Beschreibung

Die Erfindung betrifft einen Profilrahmen für eine Kraftfahrzeugtür mit den Merkmalen des Oberbegriffs von Anspruch 1, eine Kraftfahrzeugtür mit einem solchen Profilrahmen gemäß dem Oberbegriff von Anspruch 7, ein Verfahren zur Herstellung eines solchen Profilrahmens gemäß dem Oberbegriff von Anspruch 13 bzw. 16 sowie ein Werkzeug zur Verwendung bei einem Herstellungsverfahren eines Profilrahmens gemäß dem Oberbegriff von Anspruch 19.

Unter einer Kraftfahrzeugtür werden im folgenden sowohl Kraftfahrzeugtüren als auch Kraftfahrzeugklappen verstanden.

Aus dem Stand der Technik ist es bekannt, den Querschnitt von Profilrahmen für Kraftfahrzeugtüren im Bereich der Türsäule zu variieren. Dies ist erforderlich, da gerade die vertikalen Rahmenbereiche einer Kraftfahrzeugtür stark auf Biegung belastet werden. Gleichzeitig soll aus Gewichts- und Kostengründen aber eine Überdimensionierung des Profilrahmens und damit der gesamten Kraftfahrzeugtür vermieden werden. Um eine Variation des Querschnitts von Profilrahmen zu ermöglichen sind verschiedene Verfahren bekannt.

Die nicht vorveröffentlichte DE 102 55 251 A1 beschreibt einen Profilrahmen, bei dem eine Änderung des Querschnitts durch Anbringung weiterer Zusatzprofile an einem Hohlprofil erreicht wird. Die Anbringung der Zusatzprofile erfolgt dabei jeweils in dem Bereich der Kraftfahrzeugtür, in dem eine Vergrößerung des Querschnitts erzielt werden soll. Nachteilig ist dabei, daß die Zusatzprofile nachträglich an dem Profilrahmen angeschweißt werden müssen. Hierdurch sind zusätzliche Arbeitsschritte notwendig. Zudem stellen Schweißnähte eine potentielle Schwachstelle dar.

Aus der den Ausgangspunkt der vorliegenden Erfindung bildenden DE 102 17 713 A1 ist ein hydraulisches Innenhochdruck-Umformverfahren bekannt. Bei diesem Verfahren wird ein geschlossenes Hohlprofil durch hydraulischen Druck von innen aufgeweitet. Nachteilig hieran ist, daß sich die Wandstärke des Hohlprofils bei der Aufweitung ändert. Die Änderung der Wandstärke ist dabei schwer vorherzusagen und nur bedingt reproduzierbar. Um eine Mindestwandstärke zu garantieren ist es erforderlich, relativ große Wandstärken für das Ausgangshohlprofil zu verwenden. Dies führt zu einer Gewichts- und Kostensteigerung sowie zu einem hohen erforderlichen Druck zur Umformung. Insgesamt ist dieses Verfahren aufwendig.

Der vorliegenden Lehre liegt das Problem zugrunde, einen Profilrahmen so auszugestalten, daß die Fertigung vereinfacht und die Steifigkeit des Profilrahmens erhöht wird. Entsprechend gilt die Problemstellung auch auf der Grundlage der Weitergestaltung einer Kraftfahrzeugtür, sowie der Optimierung des Herstellungsverfahrens.

Das obige Problem wird bei einem Profilrahmen mit den Merkmalen des Oberbegriffs von Anspruch 1 durch die Merkmale des kennzeichnenden Teils von Anspruch 1 gelöst. Vorteilhafte Weiterbildungen sind Gegenstand der Ansprüche 2 bis 6.

Weiterhin wird die Lehre der Erfindung deutlich an einer Kraftfahrzeugtür mit den Merkmalen des Anspruchs 7. Vorteilhafte Weiterbildungen sind Gegenstand der Ansprüche 8 bis 12.

Gegenstand der Lehre ist schließlich auch ein Verfahren zur Herstellung eines Profilrahmens wie es in Anspruch 13 bzw. 16 beschrieben ist, sowie ein Werkzeug zum Einsatz bei diesem Verfahren wie es in Anspruch 19 beschrieben ist. Bevorzugte Ausgestaltungen der Verfahren sind Gegenstand der Ansprüche 14 und 15 bzw. 17 und 18. Eine bevorzugte Ausgestaltung des Werkzeugs ist Gegenstand des Anspruchs 20.

Die grundlegende Idee der vorliegenden Erfindung liegt darin, den Querschnitt eines Profilrahmens dadurch veränderbar zu gestalten, daß der Profilrahmen ein Hohlprofil mit einer zusätzlichen Wandungslänge aufweist. Der Querschnitt des Hohlprofils wird also nicht dadurch verändert, daß die Wandstärke des Hohlprofils zur Erzielung zusätzlicher Wandungslängen verändert wird. Es wird vielmehr eine zusätzliche Wandungslänge in den Abschnitten mit geringerem Querschnitt vorgehalten, die in den Abschnitten mit größerem Querschnitt des Hohlprofils zur Realisierung dieses größeren Querschnittes genutzt werden kann.

Weitere Einzelheiten, Merkmale, Ziele und Vorteile der vorliegenden Erfindung werden nachfolgend anhand der Zeichnung bevorzugter Ausführungsbeispiele näher erläutert. In der Zeichnung zeigt
- Fig. 1: einen Schnitt durch einen erfindungsgemäßen Profilrahmen im Ausgangszustand,
- Fig. 2: einen Profilrahmen wie in Fig. 1 mit maximal aufgeweitetem Hohlprofil,
- Fig. 3: einen Schnitt durch einen weiteren erfindungsgemäßen Profilrahmen, der in eine Kraftfahrzeugtür eingebaut ist,
- Fig. 4: einen Schnitt durch einen erfindungsgemäßen Profilrahmen mit einem beweglichen konischen Werkzeug zur Aufweitung.
- Fig. 5: einen Profilrahmen wie in Fig. 4, bei dem die Aufweitung mittels eines Innenhochdruck-Umformverfahrens erfolgt,
- Fig. 6: einen Schnitt durch einen Profilrahmen, bei dem der Querschnitt des Hohlprofils verringert wird.

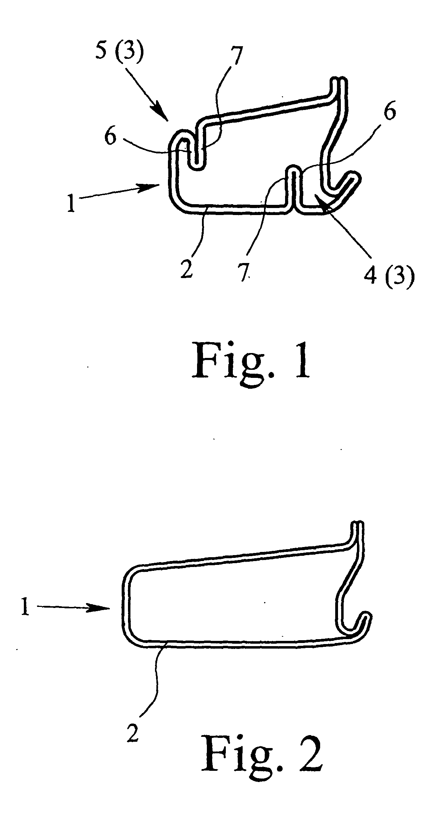

Fig. 1 zeigt einen Profilrahmen 1 bestimmt für einen Türrohbau einer Kraftfahrzeugtür. Dieser Profilrahmen 1 weist zunächst ein über die Länge des Profilrahmens 1 verlaufendes, von einer Wandung gebildetes Hohlprofil 2 auf. Das Hohlprofil 2 des Profilrahmens 1 soll zumindest abschnittsweise, insbesondere im Bereich eines im eingebauten Zustand des Profilrahmens 1 im wesentlichen senkrecht verlaufenden Randes des Türrohbaus, einen sich über seine Länge ändernden Querschnitt aufweisen.

Das in Fig. 1 dargestellte Hohlprofil 2 des Profilrahmens 1 weist eine Wandung auf, deren Wandstärke über ihre Länge im wesentlichen konstant ist. Der in Fig. 1 dargestellte Schnitt zeigt jedoch, daß das Hohlprofil 2 eine Wandung hat, die durch ihren Verlauf eine zusätzliche Wandungslänge 3 bereitstellt.

Der Querschnitt des Hohlprofils 2 kann sich so zumindest abschnittsweise über die Länge des Profilrahmens 1 ändern, ohne daß sich die Wandstärke der Wandung des Hohlprofils 2 ebenfalls ändert. Die Änderung des Querschnitts des Hohlprofils 2 ist durch Nutzung der zusätzlichen Wandungslänge 3 der Wandung des Hohlprofils möglich. Die zusätzliche Wandungslänge 3 des Hohlprofils 2 wird hier durch zwei Wandungstaschen 4, 5, die an dem Hohlprofil 2 gebildet sind, bereitgestellt. Die Wandungstaschen 4, 5 ragen in das Hohlprofil 2 hinein und stehen dabei im dargestellten Ausführungsbeispiel im wesentlichen rechtwinklig von der Wandung des Hohlprofils ab. Dies ist nicht zwingend notwendig, vereinfacht aber die Fertigung. Die Wandungstaschen 4, 5 sind dabei so geformt, daß sie einen hinlaufenden Wandungsabschnitt 6 und einen rücklaufenden Wandungsabschnitt 7 aufweisen. Der hin- und der rücklaufende Wandungsabschnitt 6, 7 berühren sich im dargestellten Ausführungsbeispiel in ihrem Verlauf. Es ist aber auch möglich, daß sich hin- und rücklaufender Wandungsabschnitt 6,7 nicht berühren. Die Gestaltung richtet sich nach dem Fertigungsaufwand und den Anforderungen bzgl. der Steifigkeit des Profilrahmens 1. Die zwei Wandungstaschen 4, 5 sind hier und vorzugsweise an gegenüberliegenden Seiten des Hohlprofils 2 angeordnet. Zusätzlich weisen beide Wandungstaschen 4, 5 im dargestellten Ausführungsbeispiel die gleiche Länge auf. Die Länge der beiden Wandungstaschen 4, 5 kann aber auch unterschiedlich sein. Hierdurch ändert sich lediglich die Form des Hohlprofils 2 bei maximaler Aufweitung.

Fig. 2 zeigt einen Schnitt durch den Profilrahmen 1 aus Fig. 1 in einem Abschnitt, in dem das Hohlprofil 2 maximal aufgeweitet ist. Die Wandungstaschen 4, 5 sind nicht mehr zu erkennen. Die Wandungstaschen 4, 5, die im dargestellten Ausführungsbeispiel die zusätzliche Wandungslänge 3 bereitstellten, sind hier gewissermaßen "verbraucht" worden, nämlich in Wandungslänge der umlaufenden Wandung des Hohlprofils 2 umgesetzt worden, so daß sich im Ergebnis der größere Querschnitt des Hohlprofils 2 ergibt. Die Aufweitung des Hohlprofils 2 führt in diesem Abschnitt des Profilrahmens 1 zu einer Erhöhung des Flächenträgheitsmoments des Hohlprofils 2.

Der Profilrahmen 1 ist so gestaltet, daß sich das Flächenträgheitsmoment zwischen minimalem und maximalem Querschnitt des Hohlprofils 2 um einen Faktor zwischen 1,3 und 5,0, vorzugsweise um einen Faktor zwischen 1,5 und 4,0 erhöht. Die zusätzliche Wandungslänge 3 des Hohlprofils 2 beträgt dabei zwischen 5 % und 40 % der ursprünglichen Wandungslänge, vorzugsweise zwischen 10 % und 30 %.

Der Profilrahmen 1 ist hier als Roll- oder Walzprofil aus einem Metall-Flachbandmaterial, vorzugsweise einem Stahl-Flachbandmaterial ausgeführt. Die Wandstärke des Profilrahmens 1 beträgt zwischen 0,3 mm und 3,5 mm, vorzugsweise zwischen 0,5 mm und 1,5 mm. Die Wandstärke der Wandung des Hohlprofils 2 bestimmt sich nach den Parametern des eingesetzten Stahls ebenso wie nach den Einsatzbedingungen des Fertigprodukts.

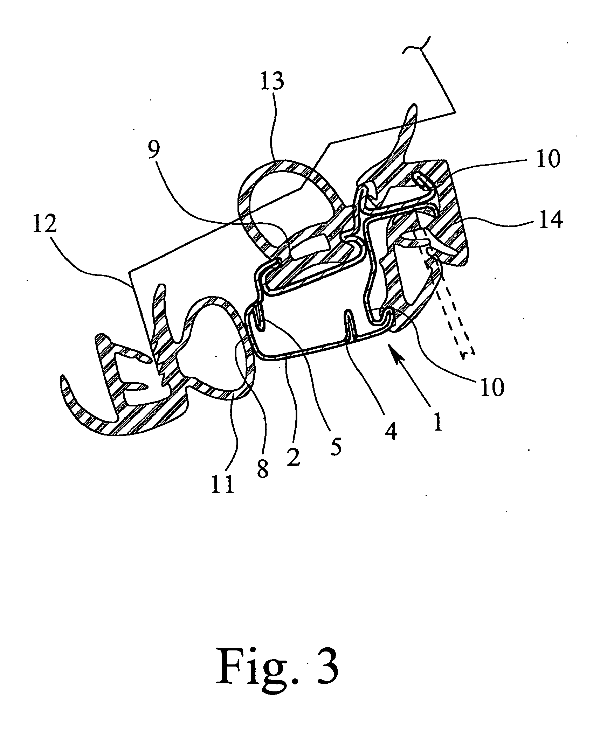

Fig. 3 zeigt einen erfindungsgemäßen Profilrahmen 1. Dieser weist zusätzlich eine Anlagefläche 8 sowie Anbringungsformungen 9 und 10 auf. Im eingebauten Zustand liegt die Anlagefläche 8 an einer umlaufenden Dichtung 11, die am Karosserieausschnitt 12 angebracht ist, an. Weiter sind eine Dichtung 13 an der Anbringungsformung 9 und eine Dichtung 14 an der Anbringungsformung 10 des Profilrahmens 1 angebracht. Die Dichtung 14 dient gleichzeitig als Fensterführungsdichtung.

Vorteilhaft ist es, wenn der Profilrahmen 1 komplett einteilig ausgeführt ist. Um ein geschlossenes Hohlprofil 2 zu erhalten, ist dann z. B. nur eine Schweißnaht notwendig. Es können aber auch andere Verbindungstechniken verwendet werden. Die einteilige Ausführung erhöht insgesamt die Steifigkeit des Profilrahmens 1.

Gegenstand der Erfindung ist ferner eine Kraftfahrzeugtür mit einem Profilrahmen 1, der ein über die Länge des Profilrahmens 1 verlaufendes, von einer Wandung gebildetes Hohlprofil 2 aufweist. Das Hohlprofil 2 des Profilrahmens 1 der Kraftfahrzeugtür weist zumindest abschnittsweise einen sich über seine Länge ändernden Querschnitt auf. Die Wandung des Hohlprofils 2 ist über ihre Länge im wesentlichen konstant und weist jedenfalls in den Abschnitten mit geringerem Querschnitt des Hohlprofils 2 einen eine zusätzliche Wandungslänge 3 bereitstellenden Verlauf auf. Bei dem Profilrahmen 1 handelt es sich insofern um einen wie zuvor beschriebenen Profilrahmen 1, für den alle Einzelheiten, Merkmale, Ziele und Vorteile entsprechend gelten.

Die Herstellung eines zuvor beschriebenen Profilrahmens 1 ist durch verschiedene Herstellungsverfahren möglich.

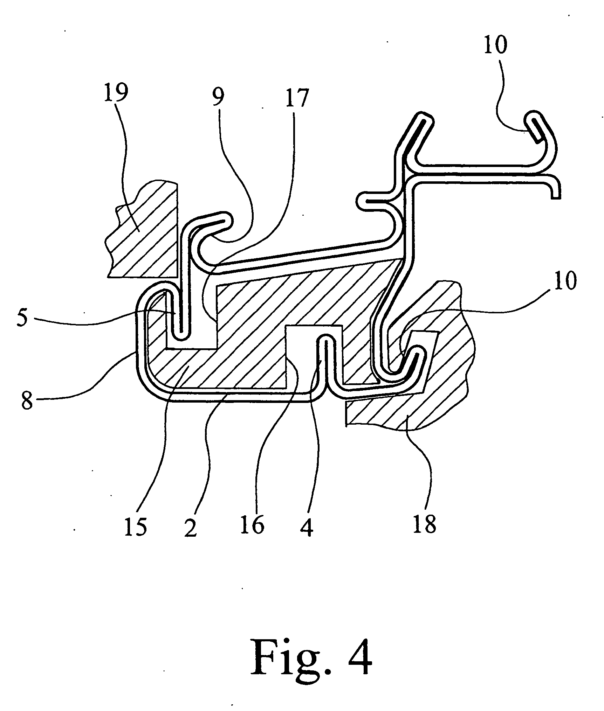

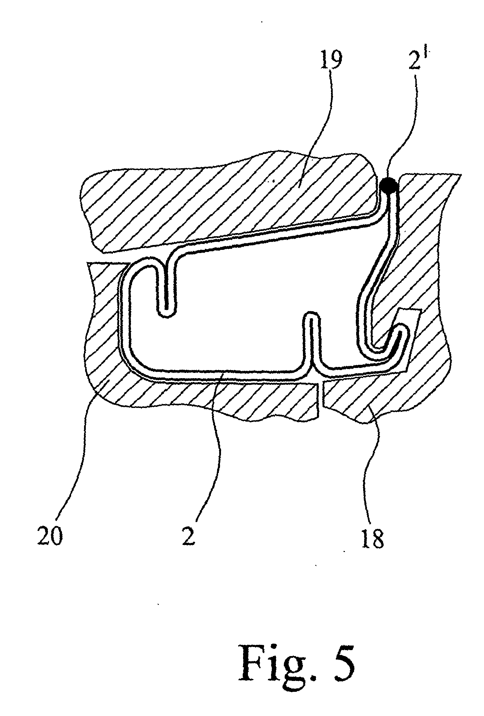

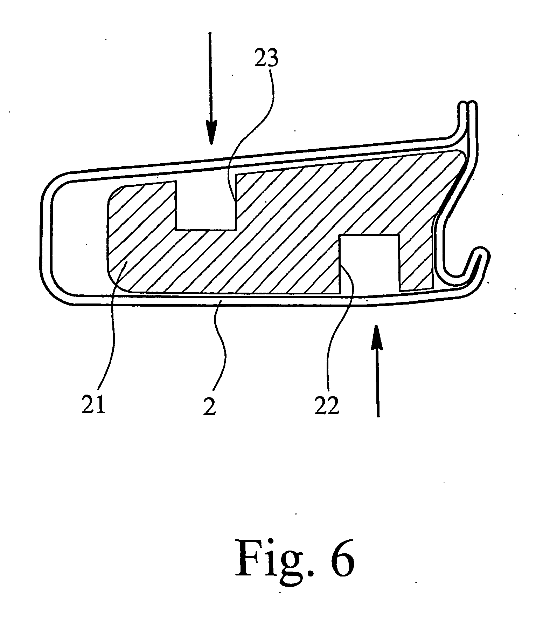

In einem ersten Verfahren (Fig. 4, 5) wird das Hohlprofil 2 eines speziell geformten Profilrahmens 1 aufgeweitet. In einem zweiten Verfahren (Fig. 6) wird der Querschnitt des Hohlprofils 2 des Profilrahmens 1 verringert. Beiden Verfahren ist gemeinsam, daß die Aufweitung/Verringerung des Querschnitts des Hohlprofils 2 stufenlos und/oder selektiv in einzelnen Abschnitten des Profilrahmens 1 erfolgen kann.

Um den Profilrahmen 1 aufweiten zu können, wird in einem ersten Verfahrensschritt aus einem Metall-Flachbandmaterial durch Roll- oder Walzprofilierung ein Profilrahmen 1 mit einem Hohlprofil 2 gefertigt. Das Hohlprofil 2 weist dabei eine zusätzliche Wandungslänge 3, vorzugsweise in Form von zwei Wandungstaschen 4, 5, auf. In einem zweiten Verfahrensschritt wird das Hohlprofil 2 zumindest abschnittsweise derart aufgeweitet, daß die Wandstärke der Wandung des Hohlprofils 2 im wesentlichen konstant bleibt und der Querschnitt des Hohlprofils durch die zusätzliche Wandungslänge 3 vergrößert wird.

Die Fertigung des Hohlprofils 2 erfolgt hier und vorzugsweise so, daß die zusätzliche Wandungslänge 3 in das Innere des Hohlprofils 2 hineinragt. Ferner erfolgt die Aufweitung des Querschnitts des Hohlprofils 2 hier und vorzugsweise stufenlos. Zudem ist es möglich die Aufweitung des Querschnitts des Hohlprofils 2 selektiv in einzelnen Abschnitten des Profilrahmens 1 durchzuführen.

Die Aufweitung des Hohlprofils 2 kann zum einen durch Einführen eines konischen Werkzeuges 15 (Fig. 4), zum anderen mittels eines hydraulischen Innenhochdruck-Umformverfahrens (Fig. 5) erfolgen.

Das für die Aufweitung erforderliche konische Werkzeug 15 wird in Längsrichtung des Profilrahmens 1 in das Hohlprofil 2 von der Ober- oder der Unterseite eingeführt (Fig. 4). Durch das Einführen des Werkzeugs 15 wird das Hohlprofil 2 derart aufgeweitet, daß die zusätzliche Wandungslänge 3 zumindest teilweise in die äußere Wandung des Hohlprofils 2 eingefügt wird. Bis auf zwei Aussparungen 16, 17 füllt das konische Werkzeug das Hohlprofil 2 nahezu vollständig aus. Die Aussparungen 16, 17 sind hier und vorzugsweise so um die Wandungstaschen 4, 5 herum angeordnet, daß jeweils eine Seite der Aussparungen 16, 17 an den Wandungstaschen 4, 5 anliegt, während die gegenüberliegende Seite der Aussparungen 16, 17 von der jeweiligen Wandungstasche 4, 5 entfernt ist. Der konische Verlauf des Werkzeugs 15 ist so gestaltet, daß beim weiteren Einführen des konischen Werkzeugs 15 in das Hohlprofil 2 die Wandungstaschen 4, 5 langsam aufgebogen werden. Gleichzeitig wird das Hohlprofil 2 von außen durch feststehende Abstützungen 18, 19 gestützt, so daß die Aufweitung nur in der gewünschten Richtung und an den gewünschten Stellen erfolgt.

Die Aufweitung mittels des hydraulischen Innenhochdruck-Umformverfahrens (Fig. 5) verläuft ähnlich. Das Hohlprofil 2 wird von außen durch feststehende Abstützeinrichtungen 18, 19 und eine bewegbare Abstützung 20 gestützt, während das Hohlprofil 2 von innen durch Hochdruck derart aufgeweitet wird, daß die zusätzliche Wandungslänge 3 zumindest teilweise in die äußere Wandung des Hohlprofils 2 eingefügt wird. Die bewegbare Abstützung 20 ist an der Seite des Hohlprofils 2 erforderlich, in deren Richtung das Hohlprofil 2 aufgeweitet wird. Die bewegbare Abstützung 20 muß dabei eine Gegenkraft gegen den Innenhochdruck aufbringen, so daß die Grundform des Hohlprofils 2 erhalten bleibt, gleichzeitig aber auch dem Druck nachgeben, so daß das Hohlprofil 2 aufgeweitet wird. Voraussetzung für das Innenhochdruck-Umformverfahren ist, daß das Hohlprofil 2 als geschlossenes Hohlprofil 2 ausgestaltet ist (Schweißnaht 2'). Die abschnittsweise Aufweitung des Hohlprofils 2 kann durch entsprechende Gestaltung der Abstützungen 18, 19, 20 erfolgen.

Bei dem Verfahren zur Verringerung des Querschnitts des Hohlprofils 2 (Fig. 6) wird in einem ersten Verfahrensschritt ein Profilrahmen 1 mit einem Hohlprofil 2 aus einem Metall-Flachbandmaterial durch Roll- oder Walzprofilierung gefertigt. Der Querschnitt des Hohlprofils 2 ist dabei der maximal notwendige Querschnitt. Anschließend wird in einem zweiten Verfahrensschritt der Querschnitt des Hohlprofils 2 zumindest abschnittsweise derart verringert, daß eine zusätzliche Wandungslänge 3 in das Innere des Hohlprofils 2 hineinragt und daß dabei die Wandstärke der Wandung des Hohlprofils 2 im wesentlichen konstant bleibt. Hierzu wird das Hohlprofil 2 hier und vorzugsweise durch eine feststehende Abstützung 21 im Inneren abgestützt, während von außen mechanische Kräfte auf das Hohlprofil 2 einwirken. Alternativ oder zusätzlich kann die zusätzliche Wandungslänge 3 durch Einführen eines ggf. konischen Werkzeugs in das Hohlprofil 2 zusammengepreßt werden.

Die feststehende Abstützung 21 weist zwei Aussparungen 22, 23 an gegenüberliegenden Seiten auf. Von außen wird dann gegenüber den Aussparungen 22, 23 mechanisch Druck auf das Hohlprofil 2 ausgeübt, so daß die Wandung des Hohlprofils 2 an diesen Stellen nach innen gedrückt wird. Vorzugsweise wird dann in einem dritten Verfahrensschritt das konisches Werkzeug in das Hohlprofil 2 eingeführt. Das konische Werkzeug weist ebenfalls zwei Aussparungen auf, die in ihrem Verlauf enger werden. Durch das Einführen des konischen Werkzeuges werden die bereits nach innen gedrückten Wandungsabschnitte zusammengepreßt. Diese bilden dann die Wandungstaschen 4, 5.

Die Verringerung des Querschnitts des Hohlprofils 2 kann je nach Durchführung des Verfahrens stufenlos und/oder selektiv in einzelnen Abschnitten des Profilrahmens 1 erfolgen.

## Patentansprüche

1. Profilrahmen für einen Türrohbau einer Kraftfahrzeugtür,
mit einem über die Länge des Profilrahmens (1) verlaufenden, von einer Wandung gebildeten Hohlprofil (2),
wobei das Hohlprofil (2) des Profilrahmens (1) zumindest abschnittsweise, insbesondere im Bereich eines im eingebauten Zustand des Profilrahmens (1) im wesentlichen senkrecht verlaufenden Randes des Türrohbaus, einen sich über seine Länge ändernden Querschnitt aufweist,
**dadurch gekennzeichnet,**
**daß** die Wandstärke der Wandung des Hohlprofils (2) über seine Länge im wesentlichen konstant ist,
**daß** die Wandung des Hohlprofils (2) jedenfalls in den Abschnitten mit geringerem Querschnitt des Hohlprofils (2) einen eine zusätzliche Wandungslänge (3) bereitstellenden Verlauf aufweist,
**daß** die zusätzliche Wandungslänge (3) durch eine oder mehrere, vorzugsweise durch zwei Wandungstaschen (4, 5) an dem Hohlprofil (2) gebildet ist,
**daß** die zusätzliche Wandungslänge (3) in einem Abschnitt mit größerem Querschnitt des Hohlprofils (2) zumindest teilweise in die äußere Wandung des Hohlprofils (2) eingefügt und dadurch in Wandungslänge der umlaufenden Wandung des Hohlprofils (2) umgesetzt ist.

2. Profilrahmen nach Anspruch 1, **dadurch gekennzeichnet,**
**daß** die Wandungstaschen (4, 5) in das Hohlprofil (2) hineinragen und/oder
**daß** die Wandungstaschen (4, 5) durch Biegungen gebildet sind und einen hin- und einen rücklaufenden Wandungsabschnitt (6, 7) aufweisen, vorzugsweise, daß sich der hinlaufende Wandungsabschnitt (6) und der rücklaufende Wandungsabschnitt (7) im wesentlichen berühren.

3. Profilrahmen nach Anspruch 1 oder 2, **dadurch gekennzeichnet,**
**daß** die Wandungstaschen (4, 5) im wesentlichen rechtwinklig von der Wandung des Hohlprofils (2) abstehen und/oder
**daß** jeweils eine Wandungstasche (4) auf einer einer anderen Wandungstasche (5) gegenüberliegenden Seite des Hohlprofils (2) angeordnet ist und/oder
**daß** die Wandungstaschen (4, 5) jeweils die gleiche Länge aufweisen.

4. Profilrahmen nach einem der vorhergehenden Ansprüche, **dadurch gekennzeichnet,**
**daß** sich das Flächenträgheitsmoment zwischen minimalem und maximalem Querschnitt des Hohlprofils (2) um einen Faktor zwischen 1,3 und 5,0, vorzugsweise um einen Faktor zwischen 1,5 und 4,0 erhöht und/oder
**daß** die zusätzliche Wandungslänge (3) des Hohlprofils (2) zwischen 5 % und 40 % der ursprünglichen Wandungslänge, vorzugsweise, zwischen 10 % und 30 % der ursprünglichen Wandungslänge beträgt.

5. Profilrahmen nach einem der vorhergehenden Ansprüche, **dadurch gekennzeichnet,**
**daß** der Profilrahmen (1) als Roll- oder Walzprofil aus einem Metall-Flachbandmaterial, vorzugsweise einem Stahl-Flachbandmaterial ausgeführt ist und/oder
**daß** der Profilrahmen (1) einstückig ausgeführt ist und/oder
**daß** die Wandstärke des Profilrahmens (1) zwischen 0,3 mm und 3,5 mm, vorzugsweise zwischen 0,5 mm und 1,5 mm beträgt.

6. Profilrahmen nach einem der vorhergehenden Ansprüche, **dadurch gekennzeichnet,**
**daß** das Hohlprofil (2), vorzugsweise mittels einer Schweißnaht, geschlossen ist und/oder
**daß** der Profilrahmen (1) mindestens eine Anlagefläche (8) und/oder Anbringungsformung (10) an dem Hohlprofil (2) aufweist.

7. Kraftfahrzeugtür mit einem Profilrahmen,
wobei der Profilrahmen (1) ein Hohlprofil (2) aufweist,
wobei das Hohlprofil (2) über die Länge des Profilrahmens (1) verläuft und von einer Wandung gebildet ist,
wobei das Hohlprofil (2) des Profilrahmens (1) zumindest abschnittsweise, insbesondere im Bereich eines im eingebauten Zustand des Profilrahmens (1) im wesentlichen senkrecht verlaufenden Randes des Türrohbaus, einen sich über seine Länge ändernden Querschnitt aufweist,
**dadurch gekennzeichnet,**
**daß** die Wandstärke der Wandung des Hohlprofils (2) über seine Länge im wesentlichen konstant ist,
**daß** die Wandung des Hohlprofils (2) jedenfalls in den Abschnitten mit geringerem Querschnitt des Hohlprofils (2) einen eine zusätzliche Wandungslänge (3) bereitstellenden Verlauf aufweist,
**daß** die zusätzliche Wandungslänge (3) durch eine oder mehrere, vorzugsweise durch zwei Wandungstaschen (4, 5) an dem Hohlprofil (2) gebildet ist und
**daß** die zusätzliche Wandungslänge (3) in einem Abschnitt mit größerem Querschnitt des Hohlprofils (2) zumindest teilweise in die äußere Wandung der Hohlprofils (2) eingefügt und dadurch in Wandungslänge der umlaufenden Wandung des Hohlprofils (2) umgesetzt ist.

8. Kraftfahrzeugtür nach Anspruch 7, **dadurch gekennzeichnet,**
**daß** die Wandungstaschen (4, 5) in das Hohlprofil (2) hineinragen und/oder
**daß** die Wandungstaschen (4, 5) durch Biegungen gebildet sind und einen hin- und einen rücklaufenden Wandungsabschnitt (6, 7) aufweisen, vorzugsweise, daß sich der hinlaufende Wandungsabschnitt (6) und der rücklaufende Wandungsabschnitt (7) im wesentlichen berühren.

9. Kraftfahrzeugtür nach Anspruch 7 oder 8, **dadurch gekennzeichnet,**
**daß** die Wandungstaschen (4, 5) im wesentlichen rechtwinklig von der Wandung des Hohlprofils (2) abstehen und/oder
**daß** jeweils eine Wandungstasche (4) auf einer einer anderen Wandungstasche (5) gegenüberliegenden Seite des Hohlprofils (2) angeordnet ist und/oder daß die Wandungstaschen (4,5) jeweils die gleiche Länge aufweisen.

10. Kraftfahrzeugtür nach einem der Ansprüche 7 bis 9, **dadurch gekennzeichnet,**
**daß** sich das Flächenträgheitsmoment zwischen minimalem und maximalem Querschnitt des Hohlprofils (2) um einen Faktor zwischen 1,3 und 5,0, vorzugsweise um einen Faktor zwischen 1,5 und 4,0 erhöht und/oder
**daß** die zusätzliche Wandungslänge (3) des Hohlprofils (2) zwischen 5 % und 40 % der ursprünglichen Wandungslänge, vorzugsweise, zwischen 10 % und 30 % der ursprünglichen Wandungslänge beträgt.

11. Kraftfahrzeugtür nach einem der Ansprüche 7 bis 10, **dadurch gekennzeichnet,**
**daß** der Profilrahmen (1) als Roll- oder Walzprofil aus einem Metall-Flachbandmateriäl, vorzugsweise einem Stahl-Flachbandmaterial ausgeführt ist und/oder
**daß** der Profilrahmen (1) einstückig ausgeführt ist und/oder
**daß** die Wandstärke des Profilrahmens (1) zwischen 0,3 mm und 3,5 mm, vorzugsweise zwischen 0,5 mm und 1,5 mm beträgt.

12. Kraftfahrzeugtür nach einem der Ansprüche 7 bis 11, **dadurch gekennzeichnet, daß** das Hohlprofil (2), vorzugsweise mittels einer Schweißnaht, geschlossen ist und/oder
daß der Profilrahmen (1) mindestens eine Anlagefläche (8) und/oder Anbringungsformung (10) an dem Hohlprofil (2) aufweist.

13. Verfahren zur Herstellung eines Profilrahmens für einen Türrohbau einer Kraftfahrzeugtür,
bei dem in einem ersten Verfahrensschritt ein Metall-Flachbandmaterial durch Roll- oder Walzprofilierung unter Ausbildung eines Hohlprofils (2) zu einem Profilrahmen (1) geformt wird,
**dadurch gekennzeichnet,**
**daß** das Hohlprofil (2) im ersten Verfahrensschritt mit einer zusätzlichen Wandungslänge (3) gefertigt wird, die durch eine oder mehrere, vorzugsweise durch zwei Wandungstaschen (4, 5) an dem Hohlprofil (2) gebildet wird bzw. werden, und
**daß** in einem zweiten Verfahrensschritt das Hohlprofil (2) zumindest abschnittsweise derart aufgeweitet wird, daß die zusätzliche Wandungslänge (3) zumindest teilweise in die äußere Wandung des Hohlprofils (2) eingefügt und dadurch in Wandungslänge der umlaufenden Wandung der Hohlprofils (2) umgesetzt wird,
wobei die Wandstärke der Wandung des Hohlprofils (2) im wesentlichen konstant bleibt und der Querschnitt des Hohlprofils (2) durch die in Wandungslänge der umlaufenden Wandung des Hohlprofils (2) umgesetzte zusätzliche Wandungslänge (3) vergrößert wird.

14. Verfahren nach Anspruch 13, **dadurch gekennzeichnet,**
**daß** das Hohlprofil (2) so gefertigt wird, daß die zusätzliche Wandunglänge (3) in das Innere des Hohlprofils (2) hineinragt und/oder
**daß** die Aufweitung des Querschnitts des Hohlprofils (2) stufenlos erfolgt
oder
**daß** die Aufweitung des Querschnitts des Hohlprofils (2) selektiv in einzelnen Abschnitten des Profilrahmens (1) erfolgt.

15. Verfahren nach Anspruch 13 oder 14, **dadurch gekennzeichnet,**
**daß** die Aufweitung des Hohlprofils (2) durch Einführen eines konischen Werkzeuges (15) erfolgt, wobei das Werkzeug (15) in Längsrichtung des Hohlprofils (2) von entweder der Ober- oder der Unterseite eingeführt wird, und daß durch das Einführen des Werkzeuges (15) das Hohlprofil (2) derart aufgeweitet wird, daß die zusätzliche Wandungslänge (3) zumindest teilweise in die äußere Wandung des Hohlprofils (2) eingefügt wird oder
**daß** das Hohlprofil (2) im ersten Verfahrensschritt vollständig geschlossen wird, daß die Aufweitung des Hohlprofils (2) mittels eines hydraulischen Innenhochdruck-Umformverfahrens erfolgt und daß das Hohlprofil (2) derart aufgeweitet wird, daß die zusätzliche Wandungslänge (3) zumindest teilweise in die äußere Wandung des Hohlprofils (2) eingefügt wird.

16. Verfahren zur Herstellung eines Profilrahmens für einen Türrohbau einer Kraftfahrzeugtür,
bei dem in einem ersten Verfahrensschritt ein Metall-Flachbandmaterial durch Roll- oder Walzprofilierung unter Ausbildung eines Hohlprofils (2) zu einem Profilrahmen (1) geformt wird,
**dadurch gekennzeichnet,**
**daß** in einem zweiten Verfahrensschritt der Querschnitt des Hohlprofils (2) zumindest abschnittsweise derart verringert wird, daß eine zusätzliche Wandungslänge (3) in das Innere des Hohlprofils (2) hineinragt, die durch eine oder mehrere, vorzugsweise durch zwei Wandungstaschen (4, 5) an dem Hohlprofil (2) gebildet wird, und daß dabei die Wandstärke der Wandung des Hohlprofils (2) im wesentlichen konstant bleibt.

17. Verfahren nach Anspruch 16, **dadurch gekennzeichnet,**
**daß** die Verringerung des Querschnitts durch von außen auf das Hohlprofil (2) einwirkende mechanische Kräfte erfolgt und das Hohlprofil (2) währenddessen von innen abgestützt wird und/oder
**daß** die zusätzliche Wandungslänge (3) durch Einführen eines Werkzeuges in das Hohlprofil (2) zusammengepreßt wird.

18. Verfahren nach Anspruch 16 oder 17, **dadurch gekennzeichnet,**
**daß** die Verringerung des Querschnitts des Hohlprofils (2) stufenlos erfolgt und/oder
**daß** die Verringerung des Querschnitts des Hohlprofils (2) selektiv in einzelnen Abschnitten des Profilrahmens (1) erfolgt.

19. Werkzeug zur Aufweitung eines Querschnitts eines Hohlprofils (2) eines Profilrahmens (1),
wobei das Hohlprofil (2) eine zusätzliche Wandungslänge (3) aufweist, die in die äußere Wandung der Hohlprofils (2) einfügbar und dadurch in Wandungslänge der umlaufenden Wandung der Hohlprofils (2) umsetzbar ist und die durch eine oder mehrere Wandungstaschen (4, 5) gebildet ist,
**dadurch gekennzeichnet,**
**daß** das Werkzeug (15) Aussparungen (16, 17) aufweist, die beim Einführen des Werkzeugs (15) in das Hohlprofil (2) um die Wandungstaschen (4, 5) herum angeordnet sind,
**daß** das Werkzeug (15) das Hohlprofil (2) ansonsten nahezu vollständig ausfüllt und
**daß** das Werkzeug (15) einen konischen Verlauf aufweist, so daß durch den konischen Verlauf bei weiterem Einführen eine Aufweitung des Querschnitts des Hohlprofils (2) erzielbar ist.

20. Werkzeug nach Anspruch 19, **dadurch gekennzeichnet,**
**daß** das Werkzeug (15) zusätzlich feststehende Abstützungen (18, 19) aufweist, wobei die feststehenden Abstützungen (18, 19) das Hohlprofil (2) von außen so abstützen, daß die Aufweitung des Querschnitts nur in der gewünschten Richtung erfolgen kann und/oder
**daß** die Aussparung an einer Seite an der zusätzlichen Wandungslänge (3) anliegt und sich nur an der anderen Seite der zusätzlichen Wandungslänge (3) erstreckt.

## Claims

1. Profiled frame for a door structure of a motor vehicle door,
with a hollow profile (2) which runs over the length of the profiled frame (1) and is formed by a wall,
wherein the hollow profile (2) of the profiled frame (1) has, at least in some sections, in particular in the region of a door structure edge which, in the fitted state of the profiled frame (1), runs essentially vertically, a cross section which changes over its length,
**characterized**
**in that** the wall thickness of the wall of the hollow profile (2) is essentially constant over its length,
**in that** the wall of the hollow profile (2) always has a profile which provides an additional wall length (3) in the sections where the hollow profile (2) has a smaller cross section,
**in that** the additional wall length (3) is formed by one or more wall pockets, preferably by two wall pockets (4, 5), on the hollow profile (2),
**in that** the additional wall length (3) is at least partially fitted into the outer wall of the hollow profile (2) in a section where the hollow profile (2) has a larger cross section and, as a result, is converted to the wall length of the encircling wall of the hollow profile (2).

2. Profiled frame according to Claim 1, **characterized**
**in that** the wall pockets (4, 5) project into the hollow profile (2), and/or
**in that** the wall pockets (4, 5) are formed by bent portions and have a wall section (6, 7) which runs forwards and back, preferably
**in that** the wall section (6) which runs forwards and the wall section (7) which runs back essentially touch.

3. Profiled frame according to Claim 1 or 2, **characterized**
**in that** the wall pockets (4, 5) protrude away from the wall of the hollow profile (2) essentially at right angles, and/or
**in that** one wall pocket (4) in each case is arranged on a side of the hollow profile (2) lying opposite another wall pocket (5), and/or
**in that** the wall pockets (4, 5) each have the same length.

4. Profiled frame according to one of the preceding claims, **characterized**
**in that** the geometrical moment of inertia between minimum and maximum cross section of the hollow profile (2) increases by a factor of between 1.3 and 5.0, preferably by a factor of between 1.5 and 4.0, and/or
**in that** the additional wall length (3) of the hollow profile (2) is between 5% and 40% of the original wall length, preferably between 10% and 30% of the original wall length.

5. Profiled frame according to one of the preceding claims, **characterized**
**in that** the profiled frame (1) is configured as a roll-formed or rolled profile from a flat-strip metal material, preferably a flat-strip steel material,
and/or
**in that** the profiled frame (1) is configured as a single piece, and/or
**in that** the wall thickness of the profiled frame (1) is between 0.3 mm and 3.5 mm, preferably between 0.5 mm and 1.5 mm.

6. Profiled frame according to one of the preceding claims, **characterized**
**in that** the hollow profile (2) is closed, preferably by means of a weld seam, and/or
**in that** the profiled frame (1) has at least one bearing surface (8) and/or attachment formation (10) on the hollow profile (2).

7. Motor vehicle door with a profiled frame,
wherein the profiled frame (1) has a hollow profile (2),
wherein the hollow profile (2) runs over the length of the profiled frame (1) and is formed by a wall,
wherein the hollow profile (2) of the profiled frame (1) has, at least in some sections, in particular in the region of a door structure edge which, in the fitted state of the profiled frame (1), runs essentially vertically, a cross section which changes over its length,
**characterized**
**in that** the wall thickness of the wall of the hollow profile (2) is essentially constant over its length,
**in that** the wall of the hollow profile (2) always has a profile which provides an additional wall length (3) in the sections where the hollow profile (2) has a smaller cross section,
**in that** the additional wall length (3) is formed by one or more wall pockets, preferably by two wall pockets (4, 5), on the hollow profile (2), and
**in that** the additional wall length (3) is at least partially fitted into the outer wall of the hollow profile (2) in a section where the hollow profile (2) has a larger cross section and, as a result, is converted to the wall length of the encircling wall of the hollow profile (2).

8. Motor vehicle door according to Claim 7, **characterized**
**in that** the wall pockets (4, 5) project into the hollow profile (2), and/or
**in that** the wall pockets (4, 5) are formed by bent portions and have a wall section (6, 7) which runs forwards and back, preferably
**in that** the wall section (6) which runs forwards and the wall section (7) which runs back essentially touch.

9. Motor vehicle door according to Claim 7 or 8, **characterized**
**in that** the wall pockets (4, 5) protrude away from the wall of the hollow profile (2) essentially at right angles, and/or
**in that** one wall pocket (4) in each case is arranged on a side of the hollow profile (2) lying opposite another wall pocket (5), and/or
**in that** the wall pockets (4, 5) each have the same length.

10. Motor vehicle door according to one of Claims 7 to 9, **characterized**
**in that** the geometrical moment of inertia between minimum and maximum cross section of the hollow profile (2) increases by a factor of between 1.3 and 5.0, preferably by a factor of between 1.5 and 4.0, and/or
**in that** the additional wall length (3) of the hollow profile (2) is between 5% and 40% of the original wall length, preferably between 10% and 30% of the original wall length.

11. Motor vehicle door according to one of Claims 7 to 10, **characterized**
**in that** the profiled frame (1) is configured as a roll-formed or rolled profile from a flat-strip metal material, preferably a flat-strip steel material,
and/or
**in that** the profiled frame (1) is configured as a single piece, and/or
**in that** the wall thickness of the profiled frame (1) is between 0.3 mm and 3.5 mm, preferably between 0.5 mm and 1.5 mm.

12. Motor vehicle door according to one of Claims 7 to 11, **characterized in that** the hollow profile (2) is closed, preferably by means of a weld seam, and/or
**in that** the profiled frame (1) has at least one bearing surface (8) and/or attachment formation (10) on the hollow profile (2).

13. Method for producing a profiled frame for a door structure of a motor vehicle door,
in which, in a first method step, a flat-strip metal material is shaped by roll-formed or rolled profiling, with a hollow profile (2) being formed, to form a profiled frame (1),
**characterized**
**in that**, in the first method step, the hollow profile (2) is manufactured with an additional wall length (3) which is formed by one or more wall pockets, preferably by two wall pockets (4, 5), on the hollow profile (2), and
**in that**, in a second method step, the hollow profile (2) is expended, at least in some sections, in such a manner that the additional wall length (3) is at least partially fitted into the outer wall of the hollow profile (2) and, as a result, is converted to the wall length of the encircling wall of the hollow profile (2), with the wall thickness of the wall of the hollow profile (2) remaining essentially constant, and the cross section of the hollow profile (2) being enlarged by the additional wall length (3) converted to the wall length of the encircling wall of the hollow profile (2).

14. Method according to Claim 13, **characterized**
**in that** the hollow profile (2) is manufactured in such a manner that the additional wall length (3) projects into the interior of the hollow profile (2), and/or
**in that** the expansion of the cross section of the hollow profile (2) takes place steplessly, or
**in that** the expansion of the cross section of the hollow profile (2) takes place selectively in individual sections of the profiled frame (1).

15. Method according to Claim 13 or 14, **characterized**
**in that** the expansion of the hollow profile (2) takes place by insertion of a conical tool (15), with the tool (15) being introduced either from the upper side or the lower side in the longitudinal direction of the hollow profile (2) and in that, by means of the insertion of the tool (15), the hollow profile (2) is expanded in such a manner that the additional wall length (3) is at least partially fitted into the outer wall of the hollow profile (2), or
**in that**, in the first method step, the hollow profile (2) is completely closed,
**in that** the expansion of the hollow profile (2) takes place by means of a hydraulic internal high-pressure forming process, and in that the hollow profile (2) is expanded in such a manner that the additional wall length (3) is at least partially fitted into the outer wall of the hollow profile (2).

16. Method for producing a profiled frame for a door structure of a motor vehicle door,
in which, in a first method step, a flat-strip metal material is shaped by roll-formed or rolled profiling, with a hollow profile (2) being formed, to form a profiled frame (1),
**characterized in that**,
in a second method step, the cross section of the hollow profile (2) is reduced, at least in some sections, in such a manner that an additional wall length (3), which is formed by one or more wall pockets, preferably by two wall pockets (4, 5), on the hollow profile (2), projects into the interior of the hollow profile (2), and **in that** the wall thickness of the wall of the hollow profile (2) remains essentially constant in the process.

17. Method according to Claim 16, **characterized**
**in that** the reduction of the cross section takes place by means of mechanical forces acting on the hollow profile (2) from the outside and, during this, the hollow profile (2) is supported from the inside, and/or
**in that** the additional wall length (3) is pressed together by insertion of a tool into the hollow profile (2) .

18. Method according to Claim 16 or 17, **characterized**
**in that** the reduction of the cross section of the hollow profile (2) takes place steplessly, and/or
**in that** the reduction of the cross section of the hollow profile (2) takes place selectively in individual sections of the profiled frame (1).

19. Tool for expanding a cross section of a hollow profile (2) of a profiled frame (1),
wherein the hollow profile (2) has an additional wall length (3) which can be fitted into the outer wall of the hollow profile (2) and, as a result, can be converted to the wall length of the encircling wall of the hollow profile (2) and which is formed by one or more wall pockets (4, 5),
**characterized**
**in that** the tool (15) has cutouts (16, 17) which are arranged around the wall pockets (4, 5) when the tool (15) is inserted into the hollow profile (2),
**in that** the tool (15) otherwise virtually completely fills the hollow profile (2), and
**in that** the tool (15) has a conical profile such that, upon further insertion, the conical profile makes it possible to obtain an expansion of the cross section of the hollow profile (2).

20. Tool according to Claim 19, **characterized**
**in that** the tool (15) additionally has stationary supports (18, 19),
wherein the stationary supports (18, 19) support the hollow profile (2) from the outside in such a manner that the expansion of the cross section can take place only in the desired direction, and/or
**in that** the cutout bears on one side against the additional wall length (3) and extends only on the other side of the additional wall length (3).

## Revendications

1. Cadre profilé pour une structure de porte de véhicule automobile, comprenant un profilé creux (2) formé par une paroi et s'étendant sur la longueur du cadre profilé (1),
le profilé creux (2) du cadre profilé (1) présentant, au moins en partie, notamment dans la région d'un bord de la structure de porte s'étendant essentiellement verticalement dans l'état monté du cadre profilé (1), une section transversale variant sur sa longueur,
**caractérisé en ce que**
l'épaisseur de paroi de la paroi du profilé creux (2) est essentiellement constante sur sa longueur,
**en ce que** la paroi du profilé creux (2) présente, dans chaque cas, dans les portions de faible section transversale du profilé creux (2), une allure fournissant une longueur de paroi supplémentaire (3),
**en ce que** la longueur de paroi supplémentaire (3) est formée par une ou plusieurs cavités de paroi (4, 5), de préférence deux, sur le profilé creux (2),
**en ce que** la longueur de paroi supplémentaire (3), dans une portion de plus grande section transversale du profilé creux (2), est insérée au moins en partie dans la paroi extérieure du profilé creux (2), et est ainsi convertie en longueur de paroi de la paroi circonférentielle du profilé creux (2).

2. Cadre profilé selon la revendication 1, **caractérisé en ce que** les cavités de paroi (4, 5) pénètrent dans le profilé creux (2) et/ou **en ce que** les cavités de paroi (4, 5) sont formées par des pliages et présentent une portion de paroi avant et une portion de paroi arrière (6, 7), de préférence **en ce que** la portion de paroi avant (6) et la portion de paroi arrière (7) sont sensiblement en contact.

3. Cadre profilé selon la revendication 1 ou 2, **caractérisé en ce que** les cavités de paroi (4, 5) font saillie essentiellement à angle droit depuis la paroi du profilé creux (2) et/ou
**en ce qu'**à chaque fois une cavité de paroi (4) est disposée sur un côté du profilé creux (2) opposé à une autre cavité de paroi (5) et/ou **en ce que** les cavités de paroi (4, 5) présentent à chaque fois la même longueur.

4. Cadre profilé selon l'une quelconque des revendications précédentes, **caractérisé en ce que**
le couple d'inertie de surface entre la section transversale minimale et la section transversale maximale du profilé creux (2) est augmenté d'un facteur compris entre 1,3 et 5,0, de préférence d'un facteur compris entre 1,5 et 4,0, et/ou
**en ce que** la longueur de paroi supplémentaire (3) du profilé creux (2) vaut entre 5 % et 40 % de la longueur de paroi initiale, de préférence entre 10 % et 30 % de la longueur de paroi initiale.

5. Cadre profilé selon l'une quelconque des revendications précédentes, **caractérisé en ce que** le cadre profilé (1) est réalisé sous forme de profilé roulé ou laminé à partir d'un matériau en bande plate en métal, de préférence un matériau en bande plate en acier, et/ou
**en ce que** le cadre profilé (1) est réalisé d'une seule pièce et/ou
**en ce que** l'épaisseur de paroi du cadre profilé (1) est comprise entre 0,3 mm et 3,5 mm, de préférence entre 0,5 mm et 1,5 mm.

6. Cadre profilé selon l'une quelconque des revendications précédentes, **caractérisé en ce que**
le profilé creux (2) est fermé de préférence au moyen d'un cordon de soudure, et/ou
**en ce que** le cadre profilé (1) présente au moins une surface d'appui (8) et/ou une formation de montage (10) sur le profilé creux (2).

7. Porte de véhicule automobile comprenant un cadre profilé,
dans laquelle le cadre profilé (1) présente un profilé creux (2),
le profilé creux (2) s'étendant sur la longueur du cadre profilé (1) et étant formé par une paroi,
le profilé creux (2) du cadre profilé (1) présentant, au moins en partie, notamment dans la région d'un bord de la structure de porte s'étendant essentiellement verticalement dans l'état monté du cadre profilé (1), une section transversale variant sur sa longueur,
**caractérisée en ce que**
l'épaisseur de paroi de la paroi du profilé creux (2) est essentiellement constante sur sa longueur,
**en ce que** la paroi du profilé creux (2) présente, dans chaque cas, dans les portions de faible section transversale du profilé creux (2), une allure fournissant une longueur de paroi supplémentaire (3),
**en ce que** la longueur de paroi supplémentaire (3) est formée par une ou plusieurs cavités de paroi (4, 5), de préférence deux, sur le profilé creux (2), et
**en ce que** la longueur de paroi supplémentaire (3), dans une portion de plus grande section transversale du profilé creux (2), est insérée au moins en partie dans la paroi extérieure du profilé creux (2), et est ainsi convertie en longueur de paroi de la paroi circonférentielle du profilé creux (2).

8. Porte de véhicule automobile selon la revendication 7, **caractérisée en ce que**
les cavités de paroi (4, 5) pénètrent dans le profilé creux (2) et/ou **en ce que** les cavités de paroi (4, 5) sont formées par des pliages et présentent une portion de paroi avant et une portion de paroi arrière (6, 7), de préférence **en ce que** la portion de paroi avant (6) et la portion de paroi arrière (7) sont sensiblement en contact.

9. Porte de véhicule automobile selon la revendication 7 ou 8, **caractérisée en ce que**
les cavités de paroi (4, 5) font saillie essentiellement à angle droit depuis la paroi du profilé creux (2) et/ou
**en ce qu'**à chaque fois une cavité de paroi (4) est disposée sur un côté du profilé creux (2) opposé à une autre cavité de paroi (5) et/ou **en ce que** les cavités de paroi (4, 5) présentent à chaque fois la même longueur.

10. Porte de véhicule automobile selon l'une quelconque des revendications 7 à 9, **caractérisée en ce que**
le couple d'inertie de surface entre la section transversale minimale et la section transversale maximale du profilé creux (2) est augmenté d'un facteur compris entre 1,3 et 5,0, de préférence d'un facteur compris entre 1,5 et 4,0, et/ou
**en ce que** la longueur de paroi supplémentaire (3) du profilé creux (2) vaut entre 5 % et 40 % de la longueur de paroi initiale, de préférence entre 10 % et 30 % de la longueur de paroi initiale.

11. Porte de véhicule automobile selon l'une quelconque des revendications 7 à 10, **caractérisée en ce que**
le cadre profilé (1) est réalisé sous forme de profilé roulé ou laminé à partir d'un matériau en bande plate en métal, de préférence un matériau en bande plate en acier, et/ou
**en ce que** le cadre profilé (1) est réalisé d'une seule pièce et/ou
**en ce que** l'épaisseur de paroi du cadre profilé (1) est comprise entre 0,3 mm et 3,5 mm, de préférence entre 0,5 mm et 1,5 mm.

12. Porte de véhicule automobile selon l'une quelconque des revendications 7 à 11, **caractérisée en ce que**
le profilé creux (2) est fermé de préférence au moyen d'un cordon de soudure, et/ou
**en ce que** le cadre profilé (1) présente au moins une surface d'appui (8) et/ou une formation de montage (10) sur le profilé creux (2).

13. Procédé de fabrication d'un cadre profilé pour une structure de porte d'une porte de véhicule automobile,
dans lequel, dans une première étape de procédé, un matériau en bande plate en métal est formé par un profilage roulé ou laminé en formant un profilé creux (2) pour former un cadre profilé (1),
**caractérisé en ce que**
le profilé creux (2) est fabriqué, dans la première étape de procédé, avec une longueur de paroi supplémentaire (3), qui est formée par une ou plusieurs cavités de paroi (4, 5), de préférence deux, sur le profilé creux (2), et
**en ce que**, dans une deuxième étape de procédé, le profilé creux (2) est élargi au moins en partie de telle sorte que la longueur de paroi supplémentaire (3) soit insérée au moins en partie dans la paroi extérieure du profilé creux (2), et soit de ce fait convertie en longueur de paroi de la paroi circonférentielle du profilé creux (2), l'épaisseur de paroi de la paroi du profilé creux (2) étant essentiellement constante, et la section transversale du profilé creux (2) étant agrandie par la longueur de paroi supplémentaire (3) convertie en longueur de paroi de la paroi circonférentielle du profilé creux (2).

14. Procédé selon la revendication 13, **caractérisé en ce que** le profilé creux (2) est fabriqué de telle sorte que la longueur de paroi supplémentaire (3) pénètre à l'intérieur du profilé creux (2) et/ou que l'élargissement de la section transversale du profilé creux (2) s'effectue de manière continue ou
que l'élargissement de la section transversale du profilé creux (2) s'effectue de manière sélective en portions individuelles du cadre profilé (1).

15. Procédé selon la revendication 13 ou 14,
**caractérisé en ce que**
l'élargissement du profilé creux (2) s'effectue en introduisant un outil conique (15), l'outil (15) étant introduit dans la direction longitudinale du profilé creux (2) depuis le côté supérieur ou le côté inférieur et **en ce que** du fait de l'insertion de l'outil (15), le profilé creux (2) est élargi de telle sorte que la longueur de paroi supplémentaire (3) soit introduite au moins en partie dans la paroi extérieure du profilé creux (2) ou
**en ce que** le profilé creux (2), dans la première étape de procédé, est complètement fermé, **en ce que** l'élargissement du profilé creux (2) s'effectue au moyen d'un procédé de déformation sous haute pression interne hydraulique et **en ce que** le profilé creux (2) est élargi de telle sorte que la longueur de paroi supplémentaire (3) soit introduite au moins en partie dans la paroi extérieure du profilé creux (2).

16. Procédé de fabrication d'un cadre profilé pour une structure de porte d'un véhicule automobile,
dans lequel, dans une première étape de procédé, un matériau en bande plate en métal est formé par profilage roulé ou laminé en formant un profilé creux (2) pour donner un cadre profilé (1),
**caractérisé en ce que**
dans une deuxième étape de procédé, la section transversale du profilé creux (2) est réduite au moins en partie de telle sorte qu'une longueur de paroi supplémentaire (3) pénètre à l'intérieur du profilé creux (2), qui est formée par une ou plusieurs cavités de paroi(4, 5), de préférence deux, sur le profilé creux (2), et **en ce que** dans ce cas l'épaisseur de paroi de la paroi du profilé creux (2) reste essentiellement constante.

17. Procédé selon la revendication 16, **caractérisé en ce que**
la réduction de la section transversale est effectuée par des forces mécaniques agissant depuis l'extérieur sur le profilé creux (2) et le profilé creux (2) pendant ce temps est supporté depuis l'intérieur et/ou
**en ce que** la longueur de paroi supplémentaire (3) est comprimée par insertion d'un outil dans le profilé creux (2).

18. Procédé selon la revendication 16 ou 17,
**caractérisé en ce que**
la réduction de la section transversale du profilé creux (2) s'effectue de manière continue et/ou
**en ce que** la réduction de la section transversale du profilé creux (2) s'effectue de manière sélective en portions individuelles du cadre profilé (1).

19. Outil pour élargir une section transversale d'un profilé creux (2) d'un cadre profilé (1),
le profilé creux (2) présentant une longueur de paroi supplémentaire (3), qui peut être introduite dans la paroi extérieure du profilé creux (2) et qui peut de ce fait être convertie en longueur de paroi de la paroi circonférentielle du profilé creux (2), et qui est formée par une ou plusieurs cavités de paroi (4, 5),
**caractérisé en ce que**
l'outil (15) présente des évidements (16, 17) qui, lors de l'insertion de l'outil (15) dans le profilé creux (2), sont disposés tout autour des cavités de paroi (4, 5),
**en ce que** l'outil (15) remplit sinon pratiquement complètement le profilé creux (2), et
**en ce que** l'outil présente une allure conique, de telle sorte qu'un élargissement de la section transversale du profilé creux (2) puisse être obtenu du fait de l'allure conique lors de l'insertion supplémentaire.

20. Outil selon la revendication 19, **caractérisé en ce que** l'outil (15) présente en outre des supports fixes (18, 19), les supports fixes (18, 19) supportant le profilé creux (2) depuis l'extérieur de telle sorte que l'élargissement de la section transversale ne puisse avoir lieu que dans la direction souhaitée et/ou
que l'évidement s'applique d'un côté contre la longueur de paroi supplémentaire (3) et ne s'étende que contre l'autre côté de la longueur de paroi supplémentaire (3).
